# EUROPEAN PATENT APPLICATION

(11) **EP 2 208 426 A1**
(43) Date of publication of application: **21.07.2010**
(21) Application number: 10150209.4
(22) Date of filing: 07.01.2010
(51) Int. Cl.: A23L 3/3436, B32B 15/08, B32B 27/00, B65D 51/24, B65D 81/20, B65D 81/24, B65D 81/26, B65D 81/28, B65D 81/30, G03C 3/00

(54) **2,5-bis(1,1,3,3-tetramethylbutyl) hydroquinone package and method for producing same**

(30) Priority: 16.01.2009 JP 2009008132
(71) Applicant: Yamamoto Chemicals, Inc., Yao-shi, Osaka 581-0034 (JP)
(72) Inventor: Kohsaka, Akihiro, Osaka 581-0034 (JP); Uemura, Kinji, Osaka 581-0034 (JP); Horiuchi, Kenichiro, Osaka 581-0034 (JP)
(74) Representative: Perry, Robert Edward

(57) **Abstract**

The invention provides a method for preventing the deterioration and discoloration of 2,5-bis(1,1,3,3-tetramethylbutyl) hydroquinone during the storage or transportation thereof.

The package of the invention is obtained by packaging 2,5-bis(1,1,3,3- tetramethylbutyl)hydroquinone in a packaging bag comprised of an aluminum laminated film. Preferably, the air in the packaging bag is replaced with an inert gas, followed by sealing.

## Description

### BACKGROUND OF THE INVENTION

### Field of the Invention

The present invention relates to a 2,5-bis(1,1,3,3-tetramethylbutyl)hydroquinone package and a method for producing the same. The package of the present invention is preferable for a package form in storing or transporting 2,5-bis(1,1,3,3-tetramethylbutyl) hydroquinone.

### Description of the Prior Art

Hydroquinone compounds have characteristics as an antioxidant; particularly, 2,5-bis(1,1,3,3-tetramethylbutyl) hydroquinone in a mixture with other agents has attention given to the usefulness thereof as an antioxidant for photographic films or the like. However, 2,5-bis(1,1,3,3-tetramethylbutyl) hydroquinone is gradually oxidized in air, resulting in its decreased purity and also its lowered antioxidant function. Its hue is liable to be discolored from inherent white to brown during storage; the discolored 2,5-bis(1,1,3,3-tetramethylbutyl) hydroquinone shows its lowered film function when used in photographic films or the like. Thus, to package 2,5-bis(1,1,3,3-tetramethylbutyl)hydroquinone for long-term storage, the container is required to have strength and light-shielding effect in addition to barrier properties to gas (oxygen), water vapor and the like. Such packaging methods include, for example, a packaging method which involves using a polyethylene bag or bottle or a glass bottle to replace the air inside the container with an inert gas to protect the content.

The former packaging using the polyethylene bag or bottle results in slight oxygen permeability although it enables an inert gas such as nitrogen or argon to be introduced to replace the air, and has a problem that long-term storage leads to the oxidation of the content due to the oxygen having permeated and thereby to the reduced purity thereof. It transmits light and thus also presents a problem of deterioration and discoloration due to the light.

In contrast, the use of the glass bottle involves no oxygen permeability of the container and also results in less entry of oxygen after displacement with an inert gas, and use of a brown glass bottle can also prevent the transmission of light. However, the glass bottle is inconvenient for transportation because the bottle is at risk of breakage and containers of the glass bottle type cannot be stacked in the storage thereof. In addition, because the glass bottle has a container form fixed, even reduced pressure cannot completely purge the air and leaves a small amount of oxygen, which causes oxidization.

As an another method, there is also a method which involves adding a deoxidant/dehumidifying agent or fixing it inside the container to adsorb and fix moisture and oxygen in the container; however, in this case, the deoxidant/dehumidifying agent may be mixed as a contaminant during the product usage, which requires close attention at the time of unsealing and use.

As another means for packaging such an oxidizable powder, for example, Japanese Patent Laid-Open No. 2007-283564 discloses a gas barrier film and packaging material capable of maintaining oxygen gas barrier properties for a long period of time, in which an oxygen-absorbing resin layer, a gas barrier resin layer and a thermoplastic resin layer are laminated. However, the gas barrier film and packaging material has a problem of deterioration and discoloration of the content due to light because it is a transparent material.

An object of the present invention is to provide a package which can maintain strength and physical properties without causing deterioration and coloration of 2,5-bis(1,1,3,3-tetramethylbutyl)hydroquinone during the storing or transporting the 2,5-bis(1,1,3,3-tetramethylbutyl) hydroquinone.

### SUMMARY OF THE INVENTION

As the result of intensive studies for solving the above-described problems, the present inventor has found a package (enclosure) in which 2,5-bis(1,1,3,3-tetramethylbutyl) hydroquinone can be packaged in a packaging bag comprised of an aluminum laminated film to prevent the deterioration and coloration thereof in storage or transportation. Thereby, the present invention is accomplished.

Thus, the present invention is as follows.
(1) A 2,5-bis(1,1,3,3-tetramethylbutyl)hydroquinone package or enclosure obtained by packaging 2,5-bis(1,1,3,3-tetramethylbutyl)hydroquinone in a packaging bag comprised of an aluminum laminated film.
(2) The 2,5-bis(1,1,3,3-tetramethylbutyl) hydroquinone package according to item (1), wherein the aluminum laminated film is a laminated film which has a base material layer, a barrier layer and a sealant layer and in which a reinforcement layer is provided between the barrier layer and the base material layer or between the barrier layer and the sealant layer and wherein the packaging bag is formed by heat-sealing the laminated film.
(3) The 2,5-bis(1,1,3,3-tetramethylbutyl) hydroquinone package according to item (2), wherein the layers are laminated with an adhesive.
(4) The 2, 5-bis (1, 1, 3, 3-tetramethylbutyl) hydroquinone package according to item (2), wherein the barrier layer is an aluminum foil.

(5) A method for producing a 2,5-bis(1,1,3,3-tetramethylbutyl)hydroquinone package or enclosure, comprising placing an aluminum laminated bag housing 2,5-bis(1,1,3,3-tetramethylbutyl)hydroquinone in a sealing device provided in a pressure-resistant container, depressurizing the inside of the pressure-resistant container to deair the inside of the aluminum laminated bag and then sealing an opening of the aluminum laminated bag.
(6) The method for producing a 2,5-bis(1,1,3,3-tetramethylbutyl)hydroquinone package according to item (5), wherein the aluminum laminated bag is a packaging bag obtained by heat-sealing a laminated film which has a base material layer, a barrier layer and a sealant layer and in which a reinforcement layer is provided between the barrier layer and the base material layer or between the barrier layer and the sealant layer.
(7) The method for producing a 2,5-bis(1,1,3,3-tetramethylbutyl) hydroquinone package according to item (5), wherein, after the deairing operation, one or two rounds or more of an operation involving supplying an inert gas to return to the atmospheric pressure and then depressurizing the inside of the pressure-resistant container are carried out followed by sealing of the opening.

According to the present invention, 2,5-bis(1,1,3,3-tetramethylbutyl)hydroquinone can be prevented from deterioration and coloration with time during the storage or transportation thereof.

### BRIEF DESCRIPTION OF THE DRAWINGS

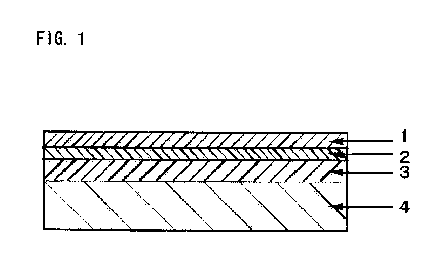

FIG. 1 is a cross-sectional view showing a cross section structure of the film in the aluminum laminated bag used in Example 1.

### Description of Symbols in the Drawings

- 1: BASE MATERIAL LAYER: BIAXIALLY ORIENTED POLYETHYLENE TEREPHTHALATE (PET)
- 2: BARRIER LAYER: ALUMINUM FOIL
- 3: REINFORCEMENT LAYER: NYLON FILM
- 4: SEALANT LAYER: CAST LINEAR LOW DENSITY POLYETHYLENE (LLDPE)

### DETAILED DESCRIPTION OF THE PREFERRED EMBODIMENT

An aluminum laminated film used in the present invention and a packaging bag comprised of the aluminum laminated film will be described below.
An aluminum laminated film used in the present invention is a laminated film in which a plurality of layers including an aluminum foil is laminated through an adhesive and is typically comprised of a base material layer, a barrier layer consisting of an aluminum foil and a sealant layer, wherein a reinforcement layer is laminated between the base material layer and the barrier layer or between the barrier layer and the sealant layer.

The base material layer provides a base material for the aluminum laminated film, and forms the outer layer of the aluminum laminated bag when the aluminum laminated film is used in the form of a packaging bag. To keep the preservation state of 2,5-bis(1,1,3,3-tetramethylbutyl) hydroquinone housed inside the aluminum laminated bag suitable over a long period of time, the base material layer preferably uses a material having moderate strength so that it presents durability or the like to external stress as well as having high piercing strength to avoid the generation of pinholes or the like due to external stimulation.

Materials capable of forming the base material layer can include an oriented polyester resin film, an oriented polyolefin resin film, and an oriented polyamide resin film, for example, a polyamide film, a polyester film, a polyolefin film, and a nylon film.

These resin films are preferably biaxially oriented films; examples thereof can include a biaxially oriented polyethylene terephthalate (PET) such as "Emblet PTM" from Unitika Ltd. as the biaxially oriented polyester resin, a biaxially oriented polypropylene (OPP) such as "Pylen Film P2161" from Toyobo Co., Ltd. as the biaxially oriented polyolefin resin, and a biaxially oriented nylon film (ONY) such as "Emblem" from Unitika Ltd. as the biaxially oriented polyamide resin.
The base material layer has a thickness of 5 to 50 µm, preferably 8 to 30 µm.

The base material layer may be subjected to antistatic treatment so as to have such antistatic properties that the aluminum laminated bag is not suffered from static charge or affected by the surrounding electric/magnetic field. A method for antistatic treatment may involve coating an antistatic agent on one side (the surface providing the outside) of the base material layer to form an antistatic layer or allowing an antistatic agent to be contained in a resin itself constructing the base material layer; this preferably makes the surface resistivity of the base material layer 10¹³Ω/cm² or less.

The barrier layer functions as a gas barrier layer against permeation of oxygen, water vapor, light or the like into the inside of the package. Thus, the barrier layer is preferably capable of inhibiting the deterioration and discoloration of 2,5-bis(1,1,3,3-tetramethylbutyl)hydroquinone housed in the inside due to external light and having properties blocking gas (oxygen), water vapor and the like, and shall also use a material having moderate strength so that it has durability to internal stress.

Materials capable of forming the barrier layer can include an aluminum foil. For example, commercially available products such as a product from Sumikei Aluminum Foil Co., Ltd. are suitably used; the foil preferably has a thickness of 7 to 9 µm.
The use of an aluminum foil as the barrier layer can make the oxygen permeability 50 ml/m²·24 hrs·MPa or less; the barrier layer has favorable gas and moisture barrier properties. In addition, this layer has electrical conductivity, which results in 2,5-bis(1,1,3,3-tetramethylbutyl)hydroquinone being covered by the conductive material and thereby electrostatically shielded when the 2,5-bis(1,1,3,3-tetramethylbutyl) hydroquinone is packaged. As a result, the compound can be protected from an external electrostatic field and the entry of gas (oxygen), water vapor and the like at once.

The reinforcement layer is a layer provided to increase the strength of the package, preferably lies between the base material layer and the barrier layer or between the barrier layer and the sealant layer, more preferably between the barrier layer and the sealant layer.
A material capable of forming the reinforcement layer is not limited provided that it is transparent and can impart necessary strength to the package; however, a polyamide resin film is suitable because it facilitates the improved strength of the package.

Examples of the polyamide resin include aliphatic polyamides such as nylon 6, nylon 66 and nylon 12 and aromatic polyamides such as polyxylenediamineadipamide (MXD6). Particularly, a polyamide resin such as "Novamid" from MitsubishiEngineering - Plastics Corporation and a polyamide MXD6 resin such as "Reny" from Mitsubishi Engineering-Plastics Corporation can be shown as examples.
The reinforcement layer has a thickness of 3 to 20 µm, preferably 5 to 16 µm.

The sealant layer forms an inner layer of a packaging bag, and functions as a heat seal layer in being made into a packaging bag.
Thus, the sealant layer suitably has heat sealability and high heat seal strength, and shall also use a material having moderate strength and piercing strength so that it has durability to stress from the inside of the packaging bag.

As a material capable of being used as the sealant layer, there may be used a polyolefin resin such as polypropylene and polyethylene, particularly a radiation-resistant resin such as a cast polypropylene (CPP) (e.g., "Aromer XET20" from Showa Denko Plastic Products Co. Ltd.), an easily peelable cast polypropylene obtained by subjecting polypropylene (PP) to multilayer coextrusion (e.g., "Aromer TP9" from Showa Denko Plastic Products Co. Ltd.), and a cast linear low density polyethylene (LLDPE) (e.g., "Lamiron MH" from Sekisui Film Co., Ltd.).
The sealant layer has a thickness of 30 to 200 µm, preferably 40 to 120 µm from the viewpoint of the maintenance of piercing strength and in the light of processability.

### (Method for Producing Laminated film)

In the aluminum laminated film used in the present invention, the base material layer, the barrier layer consisting of an aluminum foil, the sealant layer and the reinforcement layer between the base material layer and the barrier layer or between the barrier layer and the sealant layer may be laminated using a known lamination method; by way of example, the lamination is carried out using a dry lamination method.

The adhesive used in the lamination may also be any of various known adhesives; examples thereof can include a polyester or polyether adhesive for dry laminates. The adhesive is preferably an aliphatic polyester-polyurethane adhesive containing no epoxy compound.
The laminated film in which the bonding has been performed using one of these adhesives is aged preferably for 6 to 48 hours at 20 to 70°C, more preferably for 12 to 48 hours at 40 to 60°C to stabilize the bonding state.

The aluminum-laminated film used in the present invention, consisting of the laminated film formed as described above can be used to form a packaging bag to provide the package of the present invention.
Methods for forming a packaging bag using the aluminum-laminated film include a method which involves placing the laminated film so that the sealant layers of the laminated film overlap each other and heat-sealing the overlapped films. This enables a packaging bag having a predetermined shape and a predetermined size to be formed.

The packaging bag can be formed, for example, by allowing the laminated film cut into a predetermined size to overlap each other, before heat-sealing, so that the sealant layer locate in the internal side, or folding the laminated film back for overlapping before heat-sealing. Preferably, the laminated film is doubly folded to make a three-side seal bag, or is a gusseted bag obtained by gusseting the laminated film.

### (Packaging of Hydroquinone)

To house 2,5-bis(1,1,3,3-tetramethylbutyl) hydroquinone in the aluminum laminated bag to make a packaged enclosure, it is preferred to use a vacuum packaging machine. The vacuum packaging machine is provided with a pressure-resistant container having a container main body and a lid body, a vacuum pump reducing the pressure in the pressure-resistant container, a gas nozzle jetting an inert gas, and a sealing device placed in the pressure-resistant container. A method is described below for housing the 2,5-bis(1,1,3,3-tetramethylbutyl)hydroquinone in the aluminum laminated bag using such a vacuum packaging machine.

2,5-Bis(1,1,3,3-tetramethylbutyl)hydroquinone in a state contained in the aluminum laminated bag is housed in place in the container main body of the vacuum packaging machine; after closing the lid body, the inside of the vacuum packaging machine is made in a depressurized state with the vacuum pump to purge the aluminum laminated bag of air; and then an inert gas such as nitrogen is slowly charged through the gas nozzle to replace the residual air in the aluminum laminated bag with the inert gas to fill the vacuum packaging machine with the inert gas. The inside of the vacuum packaging machine is further made in a depressurized state with the vacuum pump to purge the aluminum laminated bag of the inert gas. The replacement operation using the depressurized state and the inert gas is preferably carried out once or twice or more, which enables the air in the aluminum laminated bag to be removed almost completely. The opening of the aluminum laminated bag is then sealed using the sealing device placed in the pressure-resistant container.
The 2,5-bis(1,1,3,3-tetramethylbutyl)hydroquinone package enclosed in this manner is suitable for transportation or long-term storage because the compound generates no oxidation or coloration due to external oxygen entry and light.

### Examples

The present invention will now be described in further detail with reference to Production Examples, Examples and Comparative Examples. However, the present invention is not intended to be limited to the examples described below.

### Production Example 1

A biaxially oriented PET film ("Emblet PTM" from Unitika Ltd., 1,000 mm long, 600 mm wide and 12 µm thick) as a base material layer, an aluminum foil ("BESPA" from Sumikei Aluminum Foil Co., Ltd., 1,000 mm long, 600 mm wide and 9 µm thick) as a barrier layer, a polyamide resin film ("Novamid" from Mitsubishi-Engineering Plastics Corporation, 1,000 mm long, 600 mm wide and 15 µm thick) as a reinforcement layer, and an LLDPE film ("Lamiron MH" from Sekisui Film Co., Ltd., 1, 000 mm long, 600 mm wide and 70 µm thick) as a sealant layer were laminated in that order using an aliphatic polyester-polyurethane resin adhesive containing no epoxy compound. The dry lamination method was used as a lamination method. The laminated film was then heat-sealed and accordingly cut to produce an aluminum laminated bag 425 mm long and 250 mm wide.

### Production Example 2

The same films for each layer as in Production Example 1 were used except for the use of a CPP film ("Aromer XET20" from Showa Denko Plastic Products Co. Ltd., 1,000 mm long, 600 mm wide and 70 µm thick) as a sealant layer to similarly provide a laminated film by dry laminating, followed by heat-sealing the film to produce an aluminum laminated bag.

### Production Example 3

The same films for each layer as in Production Example 1 were used except for the use of a OPP film ("Pylen Film P2161" from Toyobo Co., Ltd., 1,000 mm long, 600 mm wide and 12 µm thick) as a base material layer to similarly provide a laminated film by dry laminating, followed by heat-sealing the film to produce an aluminum laminated bag.

Summarizing the constructions of the above Examples 1 to 3 yields Table 1 as described below.
The laminated film and aluminum laminated bag of the present invention are not intended to be limited to these Production Examples, and various changes can be made in the scope of the object of the present invention.

**Table 1**

| | Base Material Layer | Barrier Layer | Reinforcement | Sealant Layer |
|---|---|---|---|---|
| Production Example 1 | Biaxially Oriented PET Film ("Emblet PTM" from Unitika Ltd., 1,000 mm long, 600 mm wide and 12 µm thick) | Aluminum Foil ("BESPA" from Sumikei Aluminum Foil Co., Ltd., 1,000 mm long, 600 mm wide and 9 µm thick) | Polyamide Resin Film ("Novamid" from Mitsubishi-Engineering Plastics Corporation, 1,000 mm long, 600 mm wide and 15 µm thick) | LLDPE Film ("Lamiron MH" from Sekisui Film Co., Ltd., 1,000 mm long, 600 mm wide and 70 µm thick) |
| Production Example 2 | Biaxially Oriented PET Film ("Emblet PTM" from Unitika Ltd., 1,000 mm long, 600 mm wide and 12 um thick) | Aluminum Foil ("BESPA" from Sumikei Aluminum Foil Co., Ltd., 1,000 mm long, 600 mm wide and 9 µm thick) | polyamide Resin Film ("Novamid" from Mitsubishi-Engineering Plastics Corporation, 1,000 mm long, 600 mm wide and 15 µm thick) | CPP Film ("Aromer XET20" from Showa Denko Plastic Products Co. Ltd., 1,000 mm long, 600 mm wide and 70 µm thick) |
| Production Example 3 | OPP Film ("Pylen Film P2161" from Toyobo Co., Ltd., 1,000 mm long, 600 mm wide and 12 µm thick) | Aluminum Foil ("BESPA" from Sumikei Aluminum Foil Co., Ltd., 1,000 mm long, 600 mm wide and 9 µm thick) | Polyamide Resin Film ("Novamid" from Mitsubishi-Engineering Plastics Corporation, 1,000 mm long, 600 mm wide and 15 µm thick) | LLDPE Film ("Lamiron MH" from Sekisui Film Co., Ltd., 1,000 mm long, 600 mm wide and 70 µm thick) |

In addition, a 2,5-bis(1,1,3,3-tetramethylbutyl) hydroquinone package was produced using the following operation.

### Example 1

2,5-Bis(1,1,3,3-tetramethylbutyl)hydroquinone (10 kg) was charged in the aluminum laminated bag produced in Production Example 1. The aluminum laminated bag was housed in an automatic vacuum packaging machine (Model V-853G from Seidenki Co., Ltd.), and a nitrogen nozzle was inserted into the opening of the aluminum laminated bag before setting in a sealing member. The lid body was closed, and the inside of the packaging machine was depressurized to 3 Torr by aspirating the air in the machine for 60 seconds using a vacuum pump. Nitrogen was then introduced through the nitrogen nozzle under a pressure of 0.1 MPa to return the inside of the packaging machine to ordinary pressure. The inside of the packaging machine was then depressurized to 3 Torr by aspirating the nitrogen gas in the machine for 60 seconds. The operation consisting of the nitrogen charging and depressurization was carried out twice to make the oxygen concentration in the aluminum laminated bag 0.2 vol%. The opening of the aluminum laminated bag was held between the upper sealing member and the lower sealing member in the as-depressurized condition and heated for 3.5 seconds to heat-seal the opening. Finally, the air was introduced into the packaging machine to return the inside of the packaging machine to ordinary pressure, and the packaged enclosure with the aluminum laminated bag in which the packaging was completed was taken out.

The four packages thus obtained were subjected to a preservation stability test. Two of the four packages were preserved in an environment exposed to light from a fluorescent lamp and external light from a window at 25°C and 50% RH with the other two packages preserved in an environment of 25°C and 50% RH under light shielding, for 150 days.

One each of the packages preserved in the environment exposed to light and in the environment in which light was shielded was opened after 60 days with the remaining one each opened after 150 days to take out 2,5-bis(1,1,3,3-tetramethylbutyl)hydroquinone to determine peak areas using liquid chromatography (LC-9A from Shimadzu Corporation). The percentage of the area under the peak of 2,5-bis(1,1,3,3-tetramethylbutyl) hydroquinone versus the total area under all of the peaks was calculated to determine the purity. The results are shown in Table 2. In the table, the column of INI means the quality of 2,5-bis(1,1,3,3-tetramethylbutyl)hydroquinone before the preservation test. A lower value of percent area shows more deteriorated 2,5-bis(1,1,3,3-tetramethylbutyl) hydroquinone.

### Comparative Example 1

2,5-Bis(1,1,3,3-tetramethylbutyl)hydroquinone was packaged in the same way as that in Example 1 except for changing the aluminum laminated bag to a black polyethylene bag and subjected to the preservation stability test. The results are shown in Table 2.

### Comparative Example 2

2,5-Bis(1,1,3,3-tetramethylbutyl)hydroquinone was packaged in the same way as that in Example 1 except for changing the aluminum laminated bag to a transparent polyethylene bag and subjected to the preservation stability test. The results are shown in Table 2.

**Table 2**

| | Preservation Stability Test | | | | | | | | | |
|---|---|---|---|---|---|---|---|---|---|---|
| | Percent Area of 2,5-Bis(1,1,3,3-tetramethylbutyl)hydroquinone | | | | | Hue | | | | |
| | INI | Condition A | | Condition B | | INI | Condition A | | Condition B | |
| | | 60d | 150d | 60d | 150d | | 60d | 150d | 60d | 150d |
| Example 1 | 99.4 | 99.4 | 99.0 | 99.4 | 99.3 | White | White | White | White | White |
| Comparative Example 1 | 99.4 | 96.5 | 92.4 | 97.3 | 95.1 | white | Brown | Brown | Brown | Brown |
| Comparative Example 2 | 99.4 | 95.3 | 91.2 | 96.8 | 94.2 | White | Brown | Brown | Brown | Brown |

Condition A: Preservation in an environment exposed to light and in an environment of 25°C and 50%RH
Condition B: Preservation in an environment of 25°C and 50%RH under light shielding
INI: Quality of 2,5-bis(1,1,3,3-tetramethylbutyl)hydroquinone before the preservation test
60 d: Quality 60 days after the start of the test
150 d: Quality 150 days after the start of the test
Hue: Visual hue of 2,5-bis(1,1,3,3-tetramethylbutyl) hydroquinone

As shown in Table 2, the package of the present invention is a package capable of maintaining favorable gas barrier performance for a long period of time and causing no deterioration or discoloration with time (Example 1). In contrast, for the black polyethylene bag (Comparative Example 1) and for the transparent polyethylene bag (Comparative Example 2), no long-term stable gas barrier performance was obtained.
This shows that the present invention can provide a package preventing the deterioration and discoloration of 2,5-bis(1,1,3,3-tetramethylbutyl)hydroquinone with time in the storage or transportation thereof.

### Examples 2 to 3

Packages were produced in the same way as that in Example 1 using the aluminum laminated bags prepared in Production Examples 2 to 3, and subjected to the preservation stability test. As a result, good results were similarly obtained.

## Claims

1. A package obtainable by packaging 2,5-bis(1,1,3,3-tetramethylbutyl)hydroquinone in a packaging bag comprising an aluminium laminated film.

2. A package according to claim 1, wherein the aluminium laminated film has a base material layer, a barrier layer, a sealant layer and, between the barrier layer and the base material layer or between the barrier layer and the sealant layer, a reinforcement layer; and wherein the packaging bag is obtainable by heat-sealing the laminated film.

3. A package according to claim 2, wherein the layers are laminated with an adhesive.

4. A package according to claim 2 or claim 3, wherein the barrier layer is an aluminium foil.

5. A method for producing a package, comprising placing an aluminium laminated bag having an opening and housing 2,5-bis(1,1,3,3-tetramethylbutyl)hydroquinone in a sealing device provided in a pressure-resistant container, depressurising the inside of the pressure-resistant container, whereby air is removed from the inside of the aluminium laminated bag, and then sealing the opening of the aluminium laminated bag.

6. A method according to claim 5, wherein the aluminium laminated bag is a packaging bag obtainable by heat-sealing a laminated film which has a base material layer, a barrier layer, a sealant layer and, between the barrier layer and the base material layer or between the barrier layer and the sealant layer, a reinforcement layer.

7. A method according to claim 5 or claim 6, wherein, after removing air from the bag, an inert gas is supplied in order to provide atmospheric pressure, and the inside of the pressure-resistant container is then depressurized before the sealing of the opening.
